(19) Europäisches Patentamt
European Patent Office
Office européen des brevets

(11) Publication number: **0 539 149 A1**

## (12) EUROPEAN PATENT APPLICATION

(21) Application number: **92309559.0**

(22) Date of filing: **20.10.92**

(51) Int. Cl.5: **H01S 3/038**

(30) Priority: **22.10.91 GB 9122384**

(43) Date of publication of application:
**28.04.93 Bulletin 93/17**

(84) Designated Contracting States:
**DE FR GB**

(71) Applicant: **BRITISH AEROSPACE PUBLIC LIMITED COMPANY**
**Warwick House, P.O. Box 87, Farnborough Aerospace Centre**
**Farnborough, Hants. GU14 6YU(GB)**

(72) Inventor: **Scott, Simon Joseph**
**British Aerospace plc., P O Box 5**
**Filton, Bristol BS12 7OW(GB)**

(74) Representative: **Rooney, Paul Blaise et al**
**British Aerospace plc, Company Headquarters, Corporate IPR Department, Lancaster House, P.O. Box 87, Farnborough Aerospace Centre**
**Farnborough, Hants. GU14 6YU (GB)**

(54) Surface discharge corona plasma cathode assembly.

(57) A surface discharge corona plasma cathode assembly having a first electrically conductive member (22), a dielectric member (24) surrounding the first member, a second electrically conductive member (26) partially surrounding the dielectric member (24) and two electrically conductive electrodes (30) defining therebetween a plasma discharge region on the dielectric member and clamping means (40) for providing a clamping force exertable upon at least one of the electrodes (30) to ensure a firm even contact between said at least one electrode and the dielectric member thereby to prevent said at least one electrode lifting away from the dielectric member (24) during operation and to provide a more even cathode emission.

Fig. 2.

This invention relates to a surface discharge corona plasma cathode assembly particularly, but not exclusively, suitable for use in a pulsed, high repetition rate electron beam generator for the creation of X-rays for the pre-ionisation of high repetition rate gas lasers.

Electron beam generating assemblies are known for generating X-rays to pre-ionise a gas laser. Such a known assembly is a corona plasma cathode which employs an insulating dielectric tube containing a conducting metal liner. An outer conductive shield surrounds at least part of the dielectric tube and electrodes adhesively bonded to the tube project therefrom into the unshielded region of the tube. An earthed anode is placed close to but spaced from the unshielded electrode area and the whole assembly is housed in a container under vacuum. Gas ionisation takes place at the electrode-dielectric-vacuum interface to form a plasma when a pulsed high voltage is applied to the electrodes. The development of the surface discharge from the electrodes depends on the proximity of the electrodes to the dielectric, thus a good uniformity of contact between the electrode and the dielectric will enhance the performance of the assembly.

It has been found that metal electrodes adhesively bonded to the surface of the dielectric are liable to lift off in places after prolonged use resulting in uneven cathode emission. In addition to this, the electrodes are prone to erosion during operation. The comparatively low resistance of presently known metal electrodes can result in localised "runaway" emissions being produced at a few points along the electrodes prior to the full establishment of the surface discharge along the entire length of the electrodes, thus further reducing the operating efficiency.

There is thus a need for an improved surface discharge corona plasma cathode assembly having a longer working life, more even cathode emission and an improved performance without the likelihood of the electrodes being prematurely eroded or producing localised "runaway" emissions.

Accordingly, the present invention provides a surface discharge corona plasma cathode assembly including a first electrically conductive member, a dielectric member surrounding the first member, a second electrically conductive member partially surrounding the dielectric member in a manner such as to leave an uncovered area of the dielectric member between two ends of the second conductive member, at least two electrically conductive electrodes located in said uncovered area in contact the one with one end and the other with the other end of the second conductive member, which electrodes define therebetween a plasma discharge region on the uncovered area of the dielectric member and a clamping means for providing a clamping force exertable upon at least one of the electrodes to ensure a firm even contact between said at least one electrode and the dielectric member thereby to prevent said at least one electrode lifting away from the dielectric member during operation and to provide a more even cathode emission.

Preferably a clamping means is provided for each electrode thereby to enhance still further the performance of the assembly.

In a particularly convenient arrangement, the second electrically conductive member and the or each electrode are provided with flanges for being clamped together by said clamping means.

The clamping means may comprise a plate and one or more screws said plate being secured to the flange on the second electrically conductive member by means of said screw and the flange on the electrode being sandwiched between said plate and said flange on the second electrically conductive member.

The screw may pass through said plate and into said flange on said second electrically conductive member towards an edge of said plate and flange on the second member, and the flange on the electrode may terminate short of said screw thereby avoiding said screw passing therethrough.

Alternatively the clamping means may comprise a clip member which in operation is positioned to sandwich the flange on the electrode between the flange on the second electrically conductive member and said plate.

In a particularly advantageous arrangement the electrodes comprise amorphous metallic glass tape. The high resistivity of said tape reduces the possibility of "runaway" emissions accruing and hence increases the efficiency of the assembly.

Conveniently, the first electrically conductive member is an elongate tube of metal and the dielectric member is an elongate tube of erosion resistant dielectric material such as quartz, glass, alumina or sapphire.

The present invention will now be more particularly described by way of example only with reference to the accompanying drawings, in which:-

Figure 1 is a diagrammatic cross sectional view through a conventional surface discharge corona plasma cathode assembly not according to the present invention;

Figure 2 is a similar cross sectional view through a surface discharge corona plasma cathode assembly according to a first embodiment of the present invention; and

Figure 3 is a still further cross sectional view through a surface discharge corona plasma cathode assembly according to a second embodiment of the present invention.

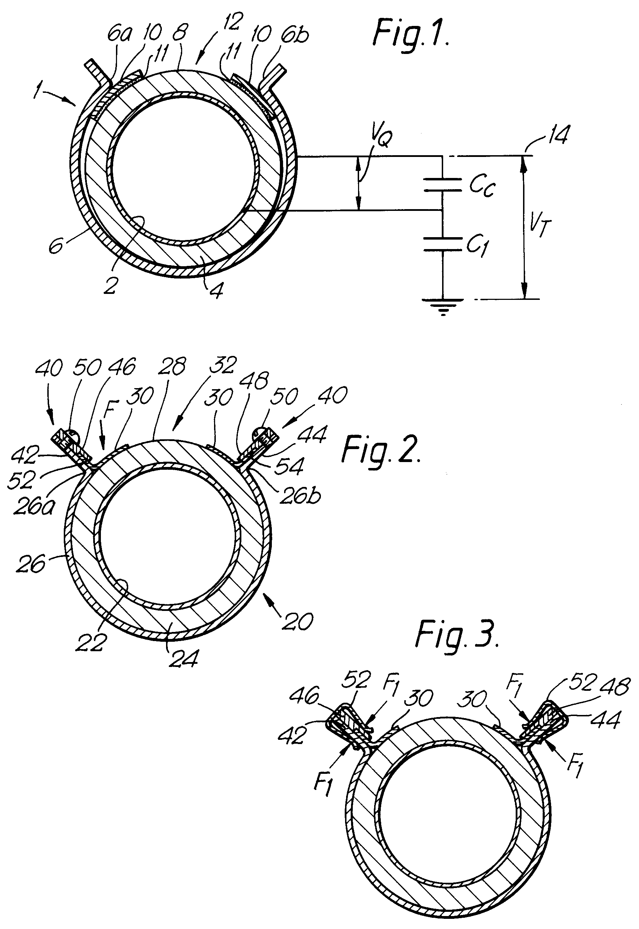

Referring to Figure 1, a conventional surface discharge corona plasma cathode assembly 1 includes a first electrically conductive inner conductor 2, a dielectric member 4 surrounding conductor 2 and an electrically conductive focusing shield 6 which partially surrounds the dielectric member 4 so a to leave an uncovered region 8 of the member 4 between two ends 6a, 6b of the shield. At least two electrically conductive electrodes 10 are located in the uncovered region 8 and are in contact the one with one end 6a and the other with the other end 6b of shield 6 and adhesively bonded at 11 to dielectric member 4. The electrodes 10 define therebetween a plasma discharge region shown generally at 12 adjacent the uncovered region 8 of dielectric member 4.

In the conventional assembly, as shown in the accompanying Figure 1, Cc is the capacitance of the cathode assembly between the inner conductor 2 and the focusing shield 6, $C_1$ is an external capacitance added as shown to divide the voltage $V_t$ of a pulse applied to the cathode assembly at 14 so that only a fraction $V_Q$ appears across the dielectric member 2. With this known assembly $V_Q$ is related to $V_T$ by the relationship

$$V_Q = V_T \frac{C_1}{C_1 + C_c} \quad \text{---- (1)}$$

Thus by changing the value of $C_1$ it is possible to increase or decrease the value $V_Q$ for a fixed $V_T$. The conventional assembly operates in a vacuum of typically $10^{-5}$ to $10^{-4}$ m bar. In operation a voltage pulse is applied at 14 which creates a high electric field between the edges of the electrodes 10 and the inner conductor 2. Field emissions of electrons take place as they are ejected onto the surface of the dielectric member 4 in the uncovered region 8 and they cause desorption, vaporisation and ionisation of adsorbed materials. Typically these adsorbates are air, water and oil vapour which are present at a low background pressure. A surface discharge thus spreads out from electrodes 10 across the surface of member 4 to cover the region 8 between said electrodes 10. The electrodes 10 are capacitatively coupled to the inner conductor 2. An electron beam can then be extracted from the discharge in the region 8 by application of an accelerating field between the cathode assembly 1 and an anode (not shown).

The establishment and development of a strong surface discharge depends on the proximity of the electrodes 10 to the dielectric member 4. Hence, any variation in the adhesive strength or thickness or variation in the proximity of the electrode 10 to the dielectric member 4 will have an adverse effect on the cathode performance. Adhesively bonded electrodes 10 are also prone to lifting off the dielectric 4 after prolonged use resulting in uneven surface discharge development along the electrode length.

In addition to the above, it has been found that, due to the comparatively low resistance of presently known metal electrodes 10, there is a tendency for localised "runaway" emissions to be produced at a few points along the electrodes 10 prior to the full establishment of the surface discharge along the entire length of the electrodes, thus further reducing the operating efficiency of the cathode 1.

It is therefore desirable to be able to reduce the distance between the electrodes 10 and the dielectric member 4 and reduce the tendency for localised "runaway" emissions.

The present invention attempts to achieve the above mentioned aim by providing a surface discharge corona plasma cathode assembly having electrodes securely clamped to the dielectric without an intermediate adhesive layer thereby to ensure even cathode emission and by providing electrodes of flexible electrodes made from a material of high natural resistivity suitable for clamping in the required manner and capable of reducing localised "runaway" emissions due to its high resistivity.

Referring now in particular to Figure 2 which is a cross-sectional view through a surface discharge corona plasma cathode assembly according to a first embodiment of the present invention, it will be seen that the cathode assembly 20 includes a first electrically conductive inner conductor 22 a dielectric member 24 surrounding conductor 22 and an electrically conductive focusing shield 26. The focusing shield partially surrounds the dielectric member 24 so as to leave an uncovered region 28 of member 24 between two ends 26a, 26b of the shield 26.

At least two electrically conductive electrodes 30 are located in the uncovered region 28 and are in contact the one with one end 26a and the other with the other end 26b of shield 26 by means to be described later. The electrodes 30 define therebetween a plasma discharge region shown generally at 32 adjacent the uncovered region 28 of dielectric member 24. Thus far the cathode assembly 20 is arranged in the standard way. However, the present invention modifies a standard cathode assembly 1 by providing a clamping means shown generally at 40 and which, in one embodiment, comprises flanges 42, 44, respectively, provided on the first and second ends 26a, 26b of shield 26, plates 46, 48 associated one with one and the other with the other with flanges 42,44 and a plurality of screws 50. Each electrode 30 is provided with a radially extending flange 52,54 respectively which in operation is sandwiched between plates 46,48 and flanges 42,44 as shown in Figure 2. The screws 50 are screwed through their respective plates 46,48 and into flanges 42, 44 in order to secure the electrode flanges 48,50.

The electrodes 30 themselves may be made from amorphous metallic glass tape which is inherently flexible and possesses high resistivity. The electrode flanges 48, 50 may be formed by simply bending the electrodes along their length as they are clamped into position by the clamping means 40 or they may be part pre-formed by a bending process.

Once clamped the electrodes 30 are maintained in direct even contact along their entire lengths with the dielectric member 24 as a result of retaining force F created when the electrodes are bent into the required shape and clamped in position. By clamping the electrodes in this manner the electrodes are securely held in position without the need for an adhesive layer and the clamping force will be effective throughout the life of the electrode as it is unaffected by any operating conditions.

As stated above, the development of the surface discharge depends on the proximity of the electrode 30 and the dielectric member 24. It will therefore be appreciated that the very close proximity of the electrode 30 to the dielectric member 24 afforded by the above mentioned invention will enhance the performance and life of a surface discharge corona plasma cathode assembly as shown at 20. In addition to this, the above mentioned invention maintains a large electrode width W in direct contact with the dielectric member thus helping to reduce the effect of electrode erosion. In practice, even when electrode erosion does take place the discharge initiation process will not be seriously affected until the electrodes 30 are eroded back so far that electrode-dielectric separation begins to increase.

The above mentioned invention also affords a good uniformity of contact between the electrodes 30 and the dielectric member 24 along the entire length thereof, thus contributing to the development of a uniform surface discharge therealong.

Amorphous metallic glass tape has been found to be a particularly good electrode material. It is highly flexible, which allows it to be bent into the required shape but is also very springy thus enabling a high retaining force F to be created when clamped. In addition to this, the high resistivity of amorphous metallic glass tape which is 100 times greater than conventional copper electrodes has the effect of reducing "runaway" emissions to a few points along the electrode and thus the uniformity of the surface discharge is enhanced.

Figure 3 illustrates one of a number of alternative clamping arrangements. The clamping means remains substantially as described previously with the exception of the screws 50 which are replaced by one or more spring clips 52. Each spring clip 52 extends along a portion of, or the entire length of, the electrode 30 and acts in the same manner a screws 50 in that it clamps electrode flanges 52, 54 between flanges 42, 44 and plates 46,48 respectively as shown. The spring clips 52 are presprung to provide a pinching force F which ensures sufficient clamping force F is provided to maintain the electrodes 30 in contact with the dielectric member 24 as required. It will of course be appreciated that other forms of clamp could be used.

## Claims

1. A surface discharge corona plasma cathode assembly (20) including a first electrically conductive member (22), a dielectric member (24) surrounding the first member (22), a second electrically conductive member (26) partially surrounding the dielectric member (24) in a manner such as to leave an uncovered area (28) of the dielectric member between two ends (26a, 26b) of the second conductive member (26), at least two electrically conductive electrodes (30) located in said uncovered area (28) in contact the one with one end (26a) and the other with the other end (26b) of the second conductive member (26), which electrodes (30) define therebetween a plasma discharge region (32) on the uncovered area (28) of the dielectric member (24) characterised by the provision of a clamping means (40) for providing a clamping force (F) exertable upon at least one of the electrodes (30) to ensure a firm even contact between said at least one electrode (30) and the dielectric member (24) thereby to prevent said at least one electrode (30) lifting away from the dielectric member (24) during operation and to provide a more even cathode emission.

2. An assembly as claimed in claim 1 in which a clamping means (40) is provided for each electrode (30).

3. An assembly as claimed in claim 1 or claim 2 in which the second electrically conductive member (26) and the or each electrode (30) are provided with flanges (42, 52) for being clamped together by said clamping means (40).

4. An assembly as claimed in claim 3 in which the clamping means (40) comprises a plate (46) and one or more screws (50) said plate (46) being secured to the flange (42) on the second electrically conductive member (26) by means of said screw (50) and the flange (52) on the electrode (30) being sandwiched between said plate (46) and said flange (52) on the second electrically conductive member (26).

5. An assembly as claimed in claim 4 in which the said one or more screws (50) pass through said plate (46) and into said flange (42) on said second electrically conductive member (26) towards an edge of said plate (46) and flange (42) on the second member, and the flange (52) on the electrode (30) terminates short of said screw (50) thereby avoiding said screw (50) passing therethrough.

6. An assembly as claimed in claim 3 in which the clamping means (40) comprises a clip member (52) which in operation is positioned to sandwich the flange (52) on the electrode between the flange (42) on the second electrically conductive member (26) and the plate (46).

7. An assembly as claimed in any one of the preceding claims in which the one or more electrodes (30) comprise amorphous metallic glass tape.

8. An assembly as claimed in any one of claims 1 to 7 in which the first electrically conductive member (22) is an elongate tube of metal.

9. An assembly as claimed in any one of claims 1 to 8 in which the dielectric member (24) is an elongate tube of erosion resistant dielectric material.

10. An assembly as claimed in claim 9 in which the erosion resistant material is quartz, glass, alumina or sapphire.

Fig.1.

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | PATENT ABSTRACTS OF JAPAN<br>vol. 10, no. 141 (E-406)(2198) 24 May 1986<br>& JP-A-61 3 484 ( TOSHIBA ) 9 January 1986<br>* abstract * | 1,2,6-10 | H01S3/038 |
| Y | US-A-4 085 385 (M.F.FEIN ET AL.)<br>* column 17, line 8 - line 61; figure 12 * | 1,2,6,7 | |
| Y | GB-A-2 163 896 (TRUMPF)<br>* claims 1-4; figure 1 * | 8-10 | |

TECHNICAL FIELDS SEARCHED (Int. Cl.5 )

H01S

The present search report has been drawn up for all claims

| Place of search | Date of completion of the search | Examiner |
|---|---|---|
| THE HAGUE | 10 FEBRUARY 1993 | MALIC K. |